# EUROPEAN PATENT APPLICATION

(11) **EP 1 028 159 A1**
(43) Date of publication of application: **16.08.2000**
(21) Application number: 98940565.9
(22) Date of filing: 27.08.1998
(51) Int. Cl.: C11B 7/00, C11B 3/16, B01D 9/02

(54) **METHOD OF DRY-FRACTIONATING FAT AND STATIONARY CRYSTALLIZATION APPARATUS**

(30) Priority: 05.09.1997 JP 24060297
(71) Applicant: Fuji Oil Company, Ltd., Osaka-shi, Osaka 542-0086 (JP)
(72) Inventor: YONEDA, Shin, Fuji Oil Co., Ltd, Hannan Factory, Osaka 598-00618-0061 (JP); HIGUCHI, Kiyoyuki, Fuji Oil Co., Ltd, Hannan Fact., Osaka 598-0061 (JP); TANIGUCHI, Atsushi, Fuji Oil Co., Ltd, Hannan Fact, Osaka 598-0061 (JP); KUWABARA, Yuji, Fuji Oil Co., Ltd, Hannan Factory, 1, Sumiyoshi-cho, Izumisano-shi (JP)
(74) Representative: VOSSIUS & PARTNER
(86) International application number: JP9803800
(87) International publication number: WO9913034

(57) **Abstract**

A method of dry-fractionating fat for subjecting raw fat to stationary crystallization and solid-liquid separation, characterized by cooling preliminary an objective fat, dividing the same into small parts inside a large vessel, and charging them in parallel into crystallization trays; and a stationary crystallization apparatus used for this method. This method drastically saves labor by employing a filter press without sacrificing the yield of high-melting fractions, can pour a predetermined quantity of the raw oil in a homogeneous state into each crystallization tray within a short time, can lower a preliminary cooling temperature, can save labor by the filter press by recycling low-melting fractions, improves the yield of the high-melting fractions over that by the conventional methods, and stabilizes the quality.

## Description

### FIELD OF THE INVENTION

The present invention relates to a method of dry-fractionating fat and a stationary crystallization apparatus.

### BACKGROUND OF THE INVENTION

Fat having high SFI (solid fat index) is effectively utilized by fractionation thereof into high and low melting point fractions. For example, in a representative fractionation method employed in the Malay Peninsula region, PKO (palm kernel oil) is pre-cooled to about 27°C and distributed into many trays, followed by subjecting to stationary crystallization at 18 to 21°C for about 10 hours, wrapping up the resultant cakes containing fat crystals with a filter cloth and subjecting the wrapped cakes to filtration under pressure (with a hydraulic press) to separate liquid from a solid phase ("SPECIALTY FATS VERSUS COCOA BUTTER" By Wong Soon, 1991). Hereinafter, this method is referred to as the conventional method.

In the conventional method, for increasing the yield of the high melting point fraction, it is required to sufficiently carry out stationary crystallization to increase the amount of fat crystals to be formed. On the other hand, this causes difficulties in filtration (solid-liquid separation) and, in order to recover fat crystals with good quality, it is necessary to press the cakes containing fat crystals under high pressure for a long period of time. However, there is a certain limit in this operation.

In addition, the conventional method has been widely employed because of its low costs of facilities. However, a large number of trays are used in the stationary crystallization step (it is said that a large number of trays as many as 10,000 to 20,000 are required for the facilities treating 100 ton of PKO per day). This step is very simple and trays are merely allowed to stand in a large room (to put trays on shelves). Then, un-uniform atmospheric temperatures of respective trays cannot be avoided and to control crystallization temperatures and time is difficult, which results in the problem that quality of products is apt to be inconsistent. Furthermore, there is such a defect that the filter cloth is apt to be worn out due to high pressure.

When the steps from the stationary crystallization to the filtration under pressure are inspected in detail, various steps such as those for releasing the cakes containing fat crystals which are in the state of solid (semi-plastic) from respective trays, wrapping them individually, transferring the wrapped cakes and then laying up them in a hydraulic press are required. However, these respective steps can hardly be automated and a great deal of labor is required. In fact, it is said that 70 to 80 persons are required for the facilities treating 100 ton of PKO per day. Therefore, from an economic viewpoint, the conventional method would no longer be realized except in such a region that considerably cheaper manpower is available.

If it were possible to transfer the cakes containing fat crystals after crystallization, an automatic filter press could be used in stead of a hydraulic press because the slurry of cakes could be transferred into the filter press through a pipe line and is filtrated by the filter press. When a filter press can be used, such intensive labor type steps as wrapping the cakes with a filter cloth and laying up it in a pressure filtration device (hydraulic press) can be eliminated. Then, some activities have been attempted to employ a filter press. However, even if the cakes after fully crystallization is crushed or smashed, a slurry having sufficient fluidity cannot be obtained and therefore the fatty material can hardly be transferred through a pipe line. Accordingly, at present, the amount of fat crystals to be formed is compelled to be controlled to maintain fluidity of slurry after crushing. That is, activities for saving labor is being attempted at the sacrifice of the yield of the high melting point fraction.

### OBJECTS OF THE INVENTION

In view of these circumstances, an object of the present invention is to establish a method of dry-fractionating fat which can save a great deal of labor by employing a filter press without the sacrifice of the yield of a high melting point fraction and can give fat of stable quality. In addition, another object of the present invention is to provide a stationary crystallization apparatus used for this method.

### BRIEF DESCRIPTION OF THE DRAWINGS

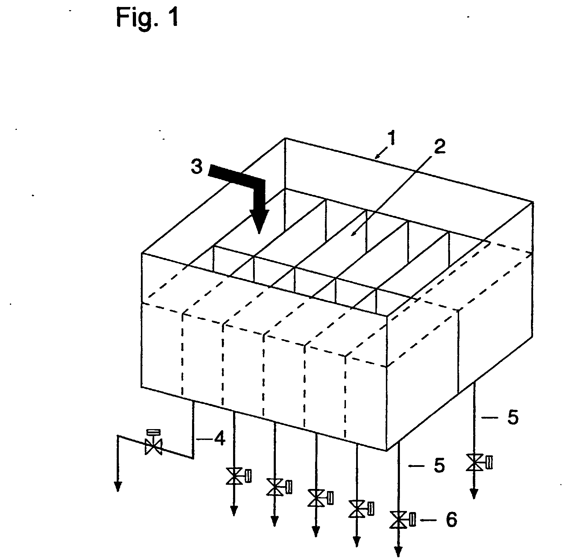

Fig. 1 is a schematic perspective view illustrating one example of a distribution device of the stationary crystallization apparatus of the present invention.

The symbols in Fig. 1 represent the following parts.
1: a vessel for dividing and distributing fat (liquid oil)
2: a partition
3: a feeder of fat to be subjected to stationary crystallization
4: a pipe for drawing out and measuring fat
5: a fat charging pipe
6: a valve

### SUMMARY OF THE INVENTION

The present inventors have studied intensively. As a result, it been found that, by recycling a certain amount of a fractionated low melting point fraction and mixing it with raw fat, even if a sufficient amount of fat crystals are formed in the stationary crystallization, crystals can be slurried and, surprisingly, a yield higher than that of the conventional method can be achieved. It has been also found that, by pre-cooling fat to be subjected to stationary crystallization, dividing it into small portions inside a large vessel, and charging them in parallel into crystallization trays to carry out stationary crystallization, a pre-cooling temperature can be lowered to about a crystallization temperature and the crystallization time can be extremely reduced. Thus, the present invention has been completed.

That is, the present invention is a method of dry-fractionating fat comprising subjecting raw fat to stationary crystallization and solid-liquid separation, said method being characterized in that fat to be subjected to stationary crystallization is pre-cooled, followed by introducing the fat to a vessel, dividing the same into portions for distribution into respective crystallization trays and charging the divided fat in parallel, preferably simultaneously into crystallization trays to carry out stationary crystallization. In this method, it is also preferred to recycle a part of the separated low melting point fraction.

In addition, the present invention is a stationary crystallization apparatus comprising a vessel for dividing and feeding fat and trays arranged in parallel, said vessel being divided into several compartments by vertical partitions which separates the inside of said vessel, said partitions communicating with each other at a certain height from the bottom of said vessel so that fat can be distributed into respective compartments uniformly, said respective compartments having openings at their upper ends so that the fat can be poured therein, and fat charging pipes connected in parallel to the bottom of respective compartments to distribute the fat into respective crystallization trays.

### DETAILED DESCRIPTION OF THE INVENTION

### Raw fat

The raw fat used in the present invention is not specifically limited, but that having a high SFI at 20°C, especially, SFI at 20°C of 20 or higher, preferably 30 or higher is suitable. Examples thereof include laurin fat and hydrogenated fat. A typical example of laurin fat is PKO. This raw fat is preferably mixed with a low melting point fraction and the fractionated low melting point fraction obtained from the separation step can be recycled for this purpose. A preferred proportion of the low melting point fraction to be mixed is 30% by weight or higher, preferably, 45% by weight or higher based on the total weight of the resulting mixture of the fats. When the mixing proportion is smaller than 30% by weight, the desired slurry as described hereinafter cannot be prepared and the desired advantages of the present invention are hardly expected. From a technical viewpoint, there is no upper limit of the mixing proportion. However, when the mixing proportion is too large (e.g., more than 70% by weight), it is undesirable because of an increase in a loading which accompanies an increase in costs of facilities.

A recycling technique of a liquid oil to raw fat is disclosed by JP-A 60-108498. However, this technique relates to the effective production of a liquid oil from raw fat having a low SFI and the inventive idea is completely different from that of the present invention where a yield of solid fat is concerned.

### Pre-cooling

For preventing wintering, the raw fat is normally kept in a melted state with warming in a tank, for example, at 40°C or higher in case of PKO. This is pre-cooled with a beat exchanger or the like. The pre-cooling can be carried out with any known heat exchanger to a temperature of, at the highest, 3°C higher than, preferably 1°C higher than, more preferably the same as or lower than the temperature for stationary crystallization (cooling medium temperature), most preferably 1°C lower than the temperature for stationary crystallization (cooling medium temperature) or lower. The pre-cooling is preferably carried out at a temperature at which no clear crystallization is taken place, normally, at the lowest, 5°C lower than the stationary crystallization temperature for a relatively short period of time.

For adjusting the pre-cooling temperature to the above-described low temperature, in practice, recycling of a fractionated low melting point fraction is required. When the recycling is not carried out, a blockade of a heat exchanger is caused by growth of crystals with the lapse of continuous treatment because of a high concentration of crystallizable components, which makes a reliable cooling operation difficult.

### Distribution of fat into stationary trays

The pre-cooled raw fat is distributed into trays. It is necessary to carry out the distribution into each tray within a short period of time with uniform distribution of crystals. Then, the fat is divided in a large vessel (vessel for dividing and feeding the fat) into small portions to distribute the portions in parallel into crystallization trays arranged in a multi-stage shelf. For example, the raw fat is divided into small portions within a large vessel with vertical partitions (divider panels) and divided raw fat portions are distributed in parallel into crystallization trays.

More specifically, for example, the distribution device as shown in Fig. 1 is used. The inside of the vessel for dividing and distributing fat having a large volume (1) is divided vertically with the partitions (2) which communicate with each other at a certain height from the bottom of the vessel to form several compartments. Each compartment has a upper opening from which fat can be poured into the compartment. The fat to be subjected to stationary crystallization is fed into the vessel (1) from the feeder (3), and is over-flowed from the upper part of compartments to uniformly fill up respective compartments. Thus, the fat is uniformly divided into small portions. After ceasing feed of the fat, when the fat is drawn out from a compartment, as occasion demands, through a pipe for drawing out and measuring fat (4) which is provided at the bottom of the compartment so that the fat level in the compartment comes to a position lower than the upper end of the partition, the amount of each divided raw fat can be controlled accurately to the volume of the compartment.

Then, the respective divided raw fat portions are charged into crystallization trays in parallel and simultaneously through respective fat charging pipes (5) connected to the bottoms of respective compartments. For charging fat in parallel and simultaneously, preferably, each fat charging pipe is provided with a valve (6) which can open and close in parallel and simultaneously with other valves by a mechanical or electronic means. According to the method of the present invention, a predetermined amount of the raw fat can be readily poured into each crystallization tray homogeneously within a short period of time.

When one fat charging pipe is used to distribute a large amount of fat into plural trays one by one in a bulk handling method (a conventional method employs such operation that fat is distributed into a tray placed on an uppermost stage to overflow from the tray to other trays placed on lower stages one by one), this operation is time-consuming and crystallization is taken place during the distribution, which varies quality and, in extreme cases, makes the distribution difficult.

### Stationary crystallization

After completion of distribution, stationary crystallization is carried out with a cooling medium (in case of treatment of PKO, a cooling medium at about 18 to 21°C is used). When air adjusted to a certain constant temperature is ventilated from the side of trays placed on a multi-stage shelf, in comparison with carrying out stationary crystallization without any cooling medium, more constant and reliable crystallization can be carried out. Although the cooling medium is not limited to air, when a liquid cooling medium is used, more precise temperature control is required because of its larger thermal conductivity. In addition, as described hereinafter, since crystallization time can be reduced, it is possible to carry out continuous crystallization by placing trays on a conveyer without any large-scale facilities.

The stationary crystallization is carried out until the iodine value (IV) of a fractionated low melting point fraction reaches about 23 or higher in case of fractionation of PKO. Even if the stationary crystallization is carried out until the IV reaches 25 or higher, the desired slurry can be prepared by subsequent crushing or smashing and therefore the high yield of PKS (high melting point fraction) can be achieved. Normally, the time required for the stationary crystallization can be reduced to 4 to 6 hours, while a conventional method generally takes about 10 hours. It is considered that this reduction of the time required for the crystallization is resulted from a synergistic effect of improvement in the emission efficiency of latent heat of crystallization due to convection of a system which is facilitated by a higher content of liquid components of the system as well as formation of nuclei for crystallization in the early stage due to the low pre-cooling temperature.

### Crushing or smashing

The fat is taken out of the trays and passed through a crusher. The cakes passed through the crusher has fluidity (slurry). Therefore, it can be transferred to the pressing step through a pipe line. The crushing or smashing can be carried out by a per se known method such as, for example, that disclosed in JP-A 2-14290.

### Pressing and solid-liquid separation

As a method for solid-liquid separation, a per se known method can be employed. Since the fat has been slurried as described above, it can be transferred through a pipe line, which makes possible to utilize a filter press which is efficient and advantageous to automation. Although an amount of the raw fat to be treated is increased due to the recycle of a low melting point fraction, the low melting point fraction is a liquid component and readily passes through a filter cloth. Therefore, treating time is hardly influenced by the recycle of a low melting point.

By the solid-liquid separation, the raw is fractionated into high and low melting point fractions. The yield of the high melting point fraction is higher than that of a conventional method and quality thereof is the same as or higher than that of a conventional method.

The following Examples and Comparative Examples further illustrate the present invention in detail but are not to be construed to limit the scope thereof. In the Examples and Comparative Examples, all the "percents" are by weight unless otherwise stated.

### Example 1

About 1000 liters of raw fat (refined bleached deodorized - palm kernel oil (RBD-PKO), SFI at 20°C: 39) heated at 40°C was placed in a jacketed pre-cooling tank and cooled with stirring to 21°C by passing cold water at 14°C through the jacket. Then, 75 L portions thereof were distributed into 11 crystallization trays with the distribution device shown in Fig. 1

The distribution device is a large vessel in a rectangular parallelepiped external form of about 1200 mm (liter) x 1100 mm (M) x 900 (H) mm, and the inside thereof is divided into 12 equal compartments with partitions (the volume of each compartment = 75 L). First, pre-cooled raw fat was introduced into the distribution device from the feeder (3) of the fat to be subjected to stationary crystallization which was provided at a predetermined position of the opening of the large vessel (1) for dividing and distributing fat. The amount of the fat to be introduced was 110% of the total volume of the compartments and 3 minutes was required until completion of the introduction. As a result, all the 12 compartments were filled up by the raw fat.

After completion of the introduction, drawing out of the raw fat was started from a pipe (4) provided at the bottom of one predetermined compartment and, when the fat level in the compartment came to a position lower than the upper end of the partition (one minute after starting drawing out of the fat), distribution of the fat in the other 11 compartments was started.

The fat charging pipes (5) provided at the bottom of respective compartments are connected to stainless crystallization trays (100 cm (liter) x 150 cm (W) x 8 cm (H)) placed on a crystallization shelf at regular intervals, respectively, and the raw fat is poured into these trays. The time required from start to finish of distribution was 4 minutes (although distribution was finished within about 1.5 minutes, this time was set somewhat longer to prevent dripping due to viscosity of the raw fat). The fat drawn out from the pipe is returned to a raw fat tank and, in industrial scale production, it is used in the next batch.

As described above, the raw fat could be distributed in a short period of time (3 + 1 + 4 = 8 minutes) and, therefore, the inconvenience due to change with time (clogging of pipes due to crystallization, etc.) could be avoided, even if the pre-cooling temperature was set at a considerably low temperature.

The crystallization trays were cooled by ventilating cold air at 21°C on both upper and bottom surfaces of respective trays at a rate of 3 m/sec for 4 hours. The solidified oil was crushed to prepare a slurry and pressed into a filter press having filtration chambers of 15 mm thick. The slurry was pressed at the maximum pressure of 30 kg/cm² for 30 minutes to conduct solid-liquid separation. Then, IV values of PKS and PKL (low melting point fraction) were analyzed. As a result, the IV values were 6.98 and 22.7, respectively (see Table 1). Since the yield was as low as 29.9, the same procedure was repeated except that the cooling was carried out for 6 hours. As a result, the yield was increased to 33.1. However, the slurry had less fluidity and, although the filter press was barely used, the industrial scale production by using this procedure would be considered to be difficult.

### Example 2

RBD-PKO (48.8 liters) heated to 40°C and PKL (26.6 liters) were mixed and placed in a jacketed pre-cooling tank and cold water at 14°C was passed through the jacket to cool to 21°C. Then, the mixture was worked up according to the same procedure as that described in Example 1. The results are shown in Table 1.

### Example 3 and Comparative Example 1

Difference in cooling temperatures was investigated. Namely, RBD-PKO (37.5 liters) heated to 40°C and PKL (37.5 liters) were mixed and placed in a jacketed pre-cooling tank jacketed and cold water at 14°C was passed through the jacket to cool to 20°C, 22°C, 24°C or 27°C. Then, the mixture was worked up according to the same procedure as that described in Example 1. The IV values of the resultant PKS fractions were 6.52, 6.55, 6.51 and 7.52, respectively and the IV values of the resultant PKL fractions were 25.6, 25.5, 25.2 and 24.6, respectively (see Table 1).

These results suggest that, when the pre-cooling temperature is lower, the crystallization time becomes shorter.

### Example 4

According to the same procedure as that described in Example 1, the fractionation was carried out except that 70% by weight of PKL was mixed with PKO. The results are shown in Table 1. As a reference, the estimated values of the conventional method (estimated by the applicant) are also shown in Table 1.

**Table 1**

| | Mixing proportion of PKL (%) | Pre-cooling end temp. (°C) | Crystallization time (hours) | IV of PKS | Yield of PKS (%) | IV of PKL |
|---|---|---|---|---|---|---|
| Ex. 1 | 0 | 21 | 4 | 6.98 | 29.9 | 22.7 |
| Ex. 1 | 0 | 21 | 6 | 7.19 | 33.1 | 23.5 |
| Ex. 2 | 35 | 21 | 4 | 6.22 | 30.9 | 23.5 |
| Ex. 2 | 35 | 21 | 6 | 6.55 | 35.9 | 25.0 |
| Ex. 3 | 50 | 20 | 6 | 6.52 | 39.8 | 25.6 |
| Ex. 3 | 50 | 22 | 6 | 6.55 | 39.1 | 25.5 |
| Ex. 3 | 50 | 24 | 6 | 6.51 | 36.4 | 25.2 |
| Comp. Ex. 1 | 50 | 27 | 6 | 7.52 | 32.8 | 24.6 |
| Ex. 4 | 70 | 19 | 1.5 | 6.61 | 30.7 | 25.0 |
| Conventional | 0 | 27 | 10 | 7.0-7.5 | 32.0 | 23.0 |

## Claims

1. A method of dry-fractionating fat comprising subjecting raw fat to stationary crystallization and solid-liquid separation, said method being characterized in that fat to be subjected to stationary crystallization is pre-cooled, followed by introducing the fat to a vessel, dividing the same into portions for distribution into respective crystallization trays and charging the divided fat in parallel into crystallization trays to carry out stationary crystallization.

2. The method of dry-fractionating fat according to claim 1, wherein the divided fat is charged into crystallization trays, simultaneously, to carry out stationary crystallization.

3. The method of dry-fractionating fat according to claim 1 or 2, wherein a part of the separated low melting point fraction is recycled to the raw fat.

4. A stationary crystallization apparatus comprising a vessel for dividing and feeding fat and trays arranged in parallel, said vessel being divided into several compartments by vertical partitions which separates the inside of said vessel, said partitions communicating with each other at a certain height from the bottom of said vessel so that fat can be distributed into respective compartments uniformly, said respective compartments having openings at their upper ends so that the fat can be poured therein, and fat charging pipes connected in parallel to the bottom of respective compartments to distribute the fat into respective crystallization trays.
